Europäisches Patentamt

**European Patent Office**

Office européen des brevets

(11) Numéro de publication:

**0 298 798**
**A2**

---

(12) **DEMANDE DE BREVET EUROPEEN**

---

Numéro de dépôt: **88401481.2**

(22) Date de dépôt: **15.06.88**

(51) Int. Cl.⁴: **A 01 D 89/00**
**A 01 F 15/00**

---

(30) Priorité: **26.06.87 FR 8709038**

(43) Date de publication de la demande:
**11.01.89 Bulletin 89/02**

(84) Etats contractants désignés: **DE FR GB NL**

Demandeur: **RIVIERRE CASALIS S.A.**
**55 Avenue Ampère**
**F-45800 St Jean de Braye (FR)**

(72) Inventeur: **Mouret, Patrick**
**328 rue de la Garenne**
**F-45660 Mardie (FR)**

(74) Mandataire: **Hirsch, Marc-Roger**
**Cabinet Hirsch 34 rue de Bassano**
**F-75008 Paris (FR)**

---

(54) **Dispositif de réduction de la largeur des andains devant un système ramasseur de machine agricole.**

 Dispositif de réduction de la largeur des andains monté devant un système ramasseur de fourrage (6) tournant autour d'un axe transversal (10) derrière un ensemble déflecteur (11) de fourrage porté par le châssis (1) de la machine, caractérisé par le fait que l'ensemble déflecteur (11) est relié cinématiquement au système ramasseur tournant (6) par un moyen de transformation du mouvement de rotation continu du ramasseur (6) en un pivotement angulaire alternatif de l'ensemble déflecteur autour d'un axe vertical (15) porté par le châssis (1) de la machine.

FIG. 1

EP 0 298 798 A2

## Description

## DISPOSITIF DE REDUCTION DE LA LARGEUR DES ANDAINS DEVANT UN SYSTEME RAMASSEUR DE MACHINE AGRICOLE

L'invention concerne un dispositif de réduction de la largeur des andains monté devant un système ramasseur de fourrage d'une machine agricole telle qu'une presse à fourrage, ensileuse ou remorque autochargeuse dans laquelle le ramasseur tourne autour d'un axe transversal derrière un ensemble déflecteur de fourrage porté par le châssis de la machine.

FR-A-2 558 031 décrit un dispositif pour former des balles et dont le châssis porte des plaques latérales qui empêchent les végétaux de sortir latéralement à l'extérieur de la zone de ramassage. Ces plaques assurent une certaine canalisation de la récolte. Le dispositif est souvent obligé de ramasser des andains d'épaisseur variables et ne permet pas dans le cas des andains peu épais de procéder à leur ramassage sur une largeur supérieure à celle de la balle. Cet inconvénient se traduit par une augmentation du temps de ramassage de la récolte dans le champ.

Conformément à l'invention, ce problème est résolu par le fait que l'ensemble déflecteur est relié cinématiquement au système ramasseur tournant par un moyen de transformation du mouvement de rotation continu du ramasseur en un pivotement angulaire alternatif de l'ensemble déflecteur autour d'un axe vertical porté par le châssis de la machine.

Le dispositif ainsi réalisé permet ainsi de ramasser une largeur d'andains supérieure aux dimensions transversales du système ramasseur et de confiner plusieurs andains devant le ramasseur au cours de la progression de la machine. Le pivotement angulaire alternatif de l'ensemble déflecteur fait décrocher les parties d'andains qui ont tendance à s'accrocher aux surfaces actives de cet ensemble.

Selon un autre mode de réalisation, l'ensemble déflecteur est constitué par au moins une plaque d'orientation générale verticale et articulée sur le châssis pour recevoir des efforts alternés de poussée et de traction provoqués par un système bielle-manivelle actionné par le ramasseur. La plaque est constituée par un panneau monté selon une orientation générale verticale et solidaire d'un flasque articulé autour d'un axe vertical porté par le châssis de la machine. Le panneau solidaire du flasque articulé peut être flexible et en appui sur un bras articulé sur une traverse portée par le châssis de la machine.

Selon encore un autre mode de réalisation de l'invention, l'ensemble déflecteur est constitué par deux plaques d'orientation générale verticale montées en tandem ou adjacentes et dont la plus éloignée du ramasseur est fixée au châssis et est montée de façon articulée sur le châssis et sur l'autre plaque qui est articulée sur le chassis et est reliée par un système bielle-manivelle au ramasseur pour être soumise, par suite de la rotation de ce ramasseur, à un déplacement alternatif de pivotement.

D'autres caractéristiques et avantages de l'invention apparaîtront à la lecture d'un exemple de réalisation de celle-ci en référence au dessin annexé, dans lequel:

- la figure 1 est une représentation schématique du profil d'une presse à balles de fourrage équipée du dispositif conforme à l'invention,

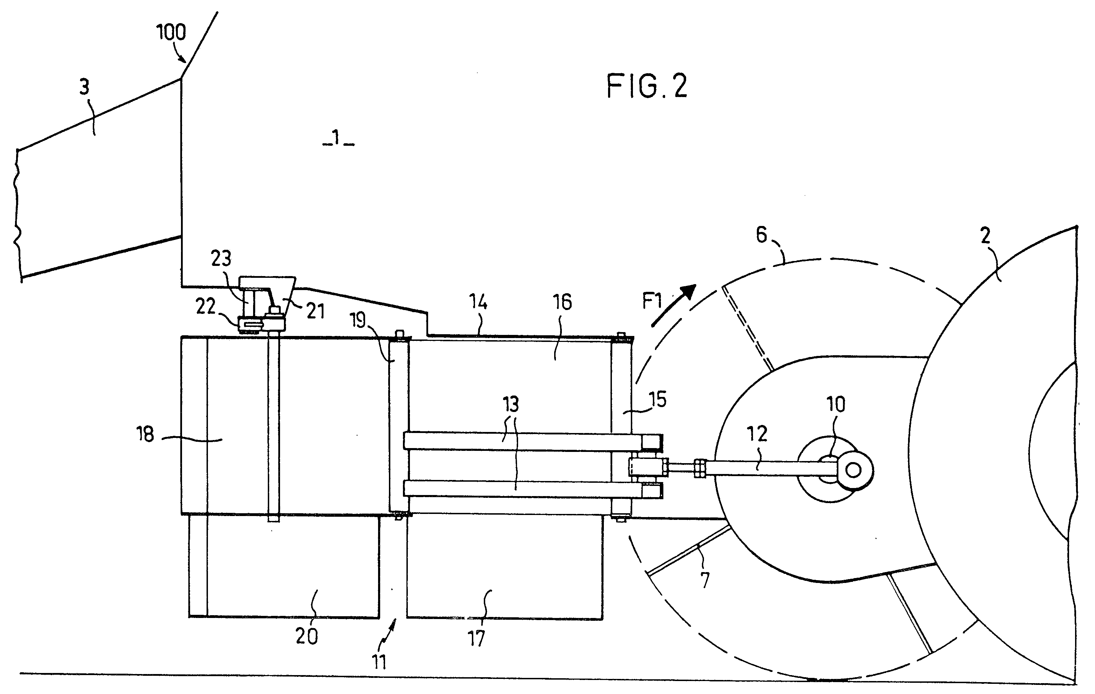

- la figure 2 est une vue latérale à plus grande échelle du dispositif,
- les figures 3 et 4 sont des vues de dessus du dispositif selon l'invention représenté dans ses phases principales de fonctionnement,
- les figures 5, 6, 7 sont des représentations schématiques de variantes de réalisation du dispositif.

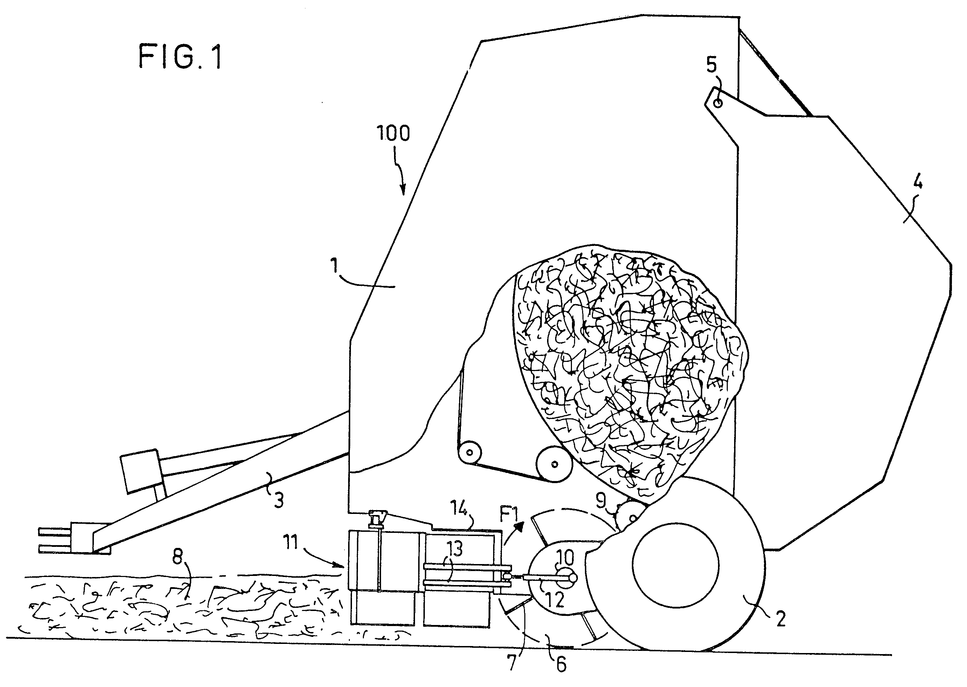

Sur la figure 1, on a désigné par la référence 100 une presse conventionnelle à balles cylindriques qui comporte un système ramasseur selon l'invention. Cette presse comporte un châssis fixe constitué par deux parois latérales 1 verticales et parallèles dont l'écartement transversal détermine la largeur de la balle à former. Le châssis est supporté par des roues 2 et porte un timon 3 d'attelage à un tracteur non représenté.

A la partie arrière du châssis fixe est articulée autour d'un axe 5 une porte 4 supportant des rouleaux de renvoi d'un ensemble de courroies, dont l'ouverture et la fermeture peuvent être commandées par des vérins ou moyens équivalents non représentés et qui assurent l'évacuation de la balle à la fin du cycle de fabrication de celle-ci. La partie avant du châssis porte un organe ramasseur 6 muni de dents 7 tournant dans le sens de la flèche F1. Le ramasseur 6 ramasse au cours du mouvement d'avance de la presse des andains de récolte 8 et les transporte dans la machine après passage au contact d'un rouleau d'alimentation cranté 9 tournant dans le même sens.

Le ramasseur 6 est monté à rotation autour d'un axe transversal matérialisé par un arbre 10 placé derrière un ensemble déflecteur 11. L'arbre 10 actionne un dispositif bielle-manivelle dont la bielle 12 de longueur ajustable est attelée à un ensemble de deux flasques parallèles 13 qui s'étendent horizontalement sous un capotage 14. Les flasques 13 sont rigidement reliés à un axe vertical d'articulation 15 fixé à deux niveaux du capotage 14 et portent une première plaque 16 qui se prolonge vers le bas par une bavette flexible 17.

La plaque 16 est reliée par ses flasques 13 avec une autre plaque 18 par un axe d'articulation 19, cette dernière plaque 18 se prolongeant également vers le bas par une bavette flexible 20. La plaque 18 est articulée sur une traverse 21 portée par le châssis de la machine, par l'intermédiaire d'un levier rigide 22 monté à articulation autour d'un axe 23 porté par la traverse.

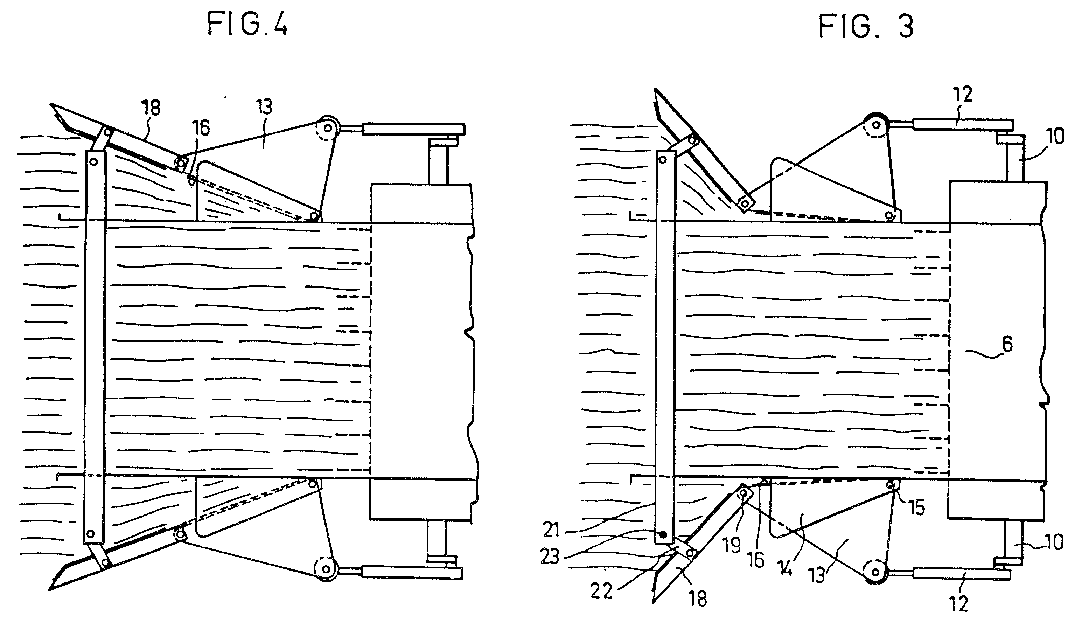

Ainsi que cela apparaît aux figures 3 et 4, la plaque 18 permet de conduire l'andain au contact de la plaque 16 dont l'amplitude du mouvement de pivotement est conditionnée par la longueur de la bielle 12.

On conçoit de la sorte que le mouvement angulaire alternatif des plaques 16, 18 autour de leurs axes d'articulation 15, 23 respectifs sous l'action de l'effort alternatif de poussée et de traction communiqué par la bielle 12 occasionne une compression latérale de l'andain et un guidage de celui-ci de la plaque 18 vers la plaque 16.

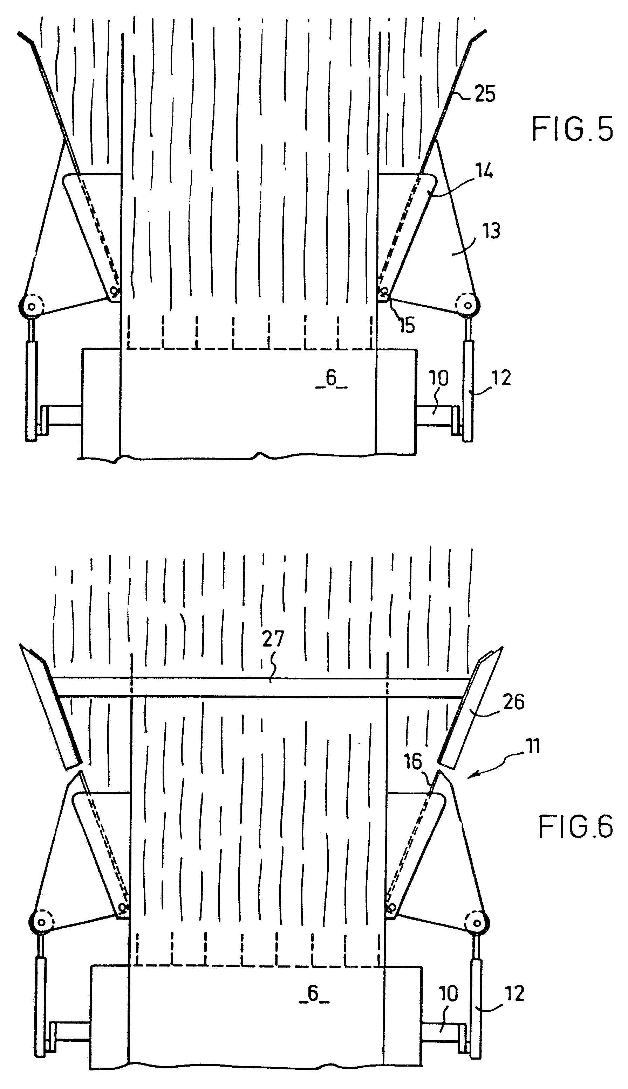

Selon la variante de réalisation du dispositif représenté à la figure 5 la plaque est constituée par un panneau 25 solidaire des flasques articulés 13. Le panneau 25 s'étend suffisamment en avant de la machine pour embrasser le cas échéant la largeur de plusieurs andains et opérer ensuite la réduction de la largeur des andains à celle d'un andain unique.

Selon la variante de réalisation du dispositif représentée à la figure 6, l'ensemble déflecteur est constitué par un ensemble de deux plaques 16, 26 montées en tandem ou en série et dont la plaque 26, la plus éloignée du ramasseur 6, est montée fixe sur une traverse 27 du châssis dans le but de constituer une paroi de guidage de l'andain vers la plaque mobile 16.

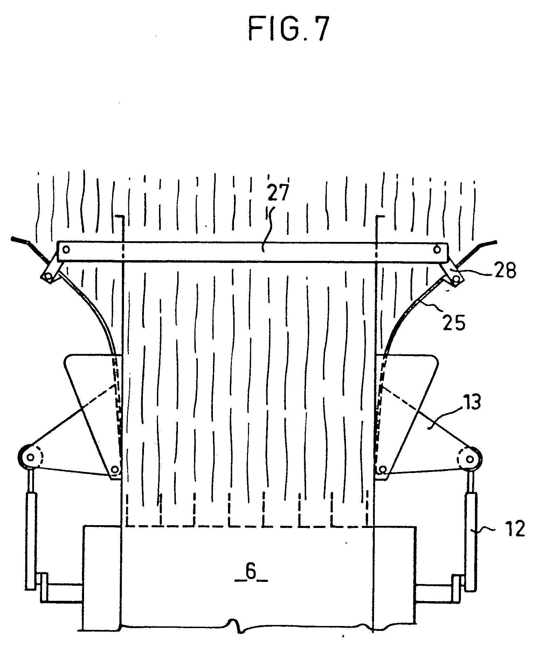

Selon la variante de réalisation du dispositif représenté à la figure 7, le panneau 25 solidaire des flasques articulés 13 possède une certaine flexibilité sous l'effet de l'effort de réaction et d'appui sur un bras 28 articulé sur la traverse 27 portée par le châssis de la machine. Le panneau 25 peut ainsi s'adapter à la réaction de l'andain au tassement et à la friction variée que produit l'andain au cours de son tassement latéral. Il résulte de l'examen des différents modes de réalisation de l'invention que l'andain est resserré du bord vers le centre et donc mis en forme latéralement avant d'être ramassé ce qui réduit sa largeur avant ramassage par l'organe ramasseur 6 qui peut alors avantageusement présenter une largeur plus réduite . On réduit ainsi le nombre de passage que la machine doit effectuer au cours du ramassage de la récolte dans un champ et par voie de conséquence le temps de ce ramassage. L'andain de récolte ramassé 8 étant plus épais que dans les solutions classiques, le tassement de la récolte est plus important et les balles de fourrage formées par roulage sont plus compactes. Le pivotement oscillant d'au moins un élément de l'ensemble déflecteur 11 évite que les parties les plus adhérentes de l'andain ne s'accrochent à cet ensemble.

## Revendications

1.- Dispositif de réduction de la largeur des andains monté devant un système ramasseur de fourrage (6) d'une machine agricole tournant autour d'un axe transversal (10) derrière un ensemble déflecteur de fourrage (11), porté par le châssis (1) de la machine, caractérisé par le fait que ledit ensemble déflecteur (11) est relié cinématiquement audit système ramasseur tournant (6) par un moyen de transformation du mouvement de rotation continu du ramasseur (6) en un pivotement angulaire alternatif de l'ensemble déflecteur (11) autour d'un axe vertical (15) porté par le châssis (1) de la machine.

2.- Dispositif selon la revendication 1, caractérisé par le fait que l'ensemble (11) est constitué par au moins une plaque (16, 25) d'orientation générale verticale et articulée sur le châssis (1) pour recevoir des efforts alternés de poussée et de traction provoqués par un système bielle-manivelle (12) actionné par le ramasseur (6).

3.- Dispositif selon la revendication 2, caractérisé par le fait que la plaque est constituée par un panneau (25) monté selon une orientation générale verticale et solidaire d'un flasque (13) articulé autour d'un axe vertical (15) porté par le châssis (1) de la machine.

4.- Dispositif selon la revendication 3, caractérisé par le fait que le panneau (25) solidaire du flasque (13) est flexible et est en appui sur un bras (28) articulé sur une traverse (27) portée par le châssis (1) de la machine.

5.- Dispositif selon la revendication 1, caractérisé par le fait que l'ensemble déflecteur (11) est constitué par deux plaques d'orientation générale verticale (16, 26) montées en tandem ou adjacentes et dont la plus éloignée du ramasseur (6) est fixée au châssis.

6.- Dispositif selon l'une des revendications 1 ou 2, caractérisé par le fait que la plaque (18) de l'ensemble déflecteur (11), la plus éloignée du ramasseur (6), est montée de façon articulée sur le châssis et sur l'autre plaque (16), qui est articulée sur le châssis (en 15) est reliée par un système bielle-manivelle (10, 12) au ramasseur (6) pour être soumise, par suite de sa rotation de ce ramasseur, à un déplacement alternatif de pivotement.

FIG.1

0298798

FIG.2

0298798

FIG. 3

FIG. 4

0298798

FIG.5

FIG.6

0298798

# FIG.7